# EUROPÄISCHE PATENTSCHRIFT

(11) **EP 2 917 072 B1**
(45) Veröffentlichungstag und Bekanntmachung des Hinweises auf die Patenterteilung: **05.09.2018**
(21) Anmeldenummer: 13785863.5
(22) Anmeldetag: 31.10.2013
(51) Int. Cl.: F21S 41/16, B60Q 1/00, B60Q 11/00, B60Q 1/14, F21Y 115/30

(54) **LICHTMODUL**
LIGHT MODULE
MODULE LUMINEUX

(30) Priorität: 09.11.2012 DE 102012220481
(43) Veröffentlichungstag der Anmeldung: 16.09.2015
(73) Patentinhaber: Automotive Lighting Reutlingen GmbH, 72762 Reutlingen (DE)
(72) Erfinder: BRENDLE, Matthias, 72074 Tübingen (DE)
(74) Vertreter: DREISS Patentanwälte PartG mbB
(86) Internationale Anmeldenummer: PCT/EP2013/072825
(87) Internationale Veröffentlichungsnummer: WO 2014/072226

(56) Entgegenhaltungen:
- US-A1- 2011 063 115
- US-A1- 2011 084 609
- US-A1- 2012 224 384
- US-B1- 6 883 947

## Beschreibung

Die Erfindung betrifft ein Lichtmodul für einen Kfz-Scheinwerfer mit einer Laserlichtquelle, gemäß dem Oberbegriff des Anspruchs 1.

Laserlichtquellen, insbesondere Halbleiterlaser, bieten eine Reihe von vorteilhaften Eigenschaften, wie z.B. eine vergleichsweise kleine lichtaussendende Fläche, hohe Strahlungsintensitäten, sowie die Ausstrahlung von weitgehend kollimierten Lichtbündeln. Optische Systeme für Laserlicht können daher mit kleineren Brennweiten aufgebaut werden, als optische Systeme für weniger stark kollimierte Lichtbündel von zum Beispiel Glühlampen oder Leuchtdioden (LEDs). Die optischen Systeme für Laserlicht lassen sich daher mit geringem Bauraum realisieren.

Probleme bei der Nutzung von Laserlichtquellen für Kfz-Beleuchtungsvorrichtungen ergeben sich insbesondere daraus, dass Laser im Wesentlichen kohärentes, monochromatisches Licht oder Licht in einem engen Wellenlängenbereich ausstrahlen. Bei den typischen hohen Strahlungsintensitäten von Laserlichtquellen ist solches Licht potenziell gefährlich, insbesondere für das menschliche Auge. Dies gilt insbesondere bei Strahlungsleistungen von einigen Watt, wie sie im Bereich der Kfz-Beleuchtung erwünscht ist. Im Straßenverkehr muss eine Blendung der Verkehrsteilnehmer aus Sicherheitsgründen vermieden werden.

Ein weiteres Problem besteht darin, dass für das abgestrahlte Licht eines Kfz-Scheinwerfers meist weißes Mischlicht erwünscht oder gesetzlich vorgeschrieben ist. Es sind daher Maßnahmen zur Umwandlung in geeignetes Licht zu treffen.

Zur Umwandlung von monochromatischem Licht in polychromatisches oder weißes Licht ist im Bereich der weißen Leuchtdioden (LEDs) oder Lumineszenzkonversions-LEDs die Verwendung von Photolumineszenzkonvertern oder Photolumineszenzelementen bekannt. Diese weisen meist einen Photolumineszenzfarbstoff auf. Das Licht einer üblicherweise farbiges (z.B. blaues) Licht ausstrahlenden LED regt den Photolumineszenzfarbstoff zur Photolumineszenz an, wodurch der Photolumineszenzfarbstoff selbst Licht einer anderen Wellenlänge (z.B. gelb) abgibt. Auf diese Weise kann zumindest ein Teil des eingestrahlten Lichts eines Wellenlängenbereichs in Licht eines anderen Wellenlängenbereichs umgewandelt werden. In der Regel wird ein weiterer Anteil des eingestrahlten Lichts durch das Photolumineszenzelement gestreut. Das gestreute Licht und das durch Photolumineszenz ausgestrahlte Licht können sich dann additiv überlagern und führen z.B. zu weißem Mischlicht.

Bei Verwendung des erläuterten Prinzips der Photolumineszenz-Konversion für Kfz-Scheinwerfer mit Laserlichtquelle kommt dem Photolumineszenzelement sicherheitsrelevante Bedeutung zu. Wird das Photolumineszenzelement zerstört oder z.B. durch mechanische Einflüsse oder einen Unfall aus dem Strahlengang der Laserlichtquelle entfernt, so können potenziell gefährliche Laserstrahlen ohne Umwandlung in das gewünschte Mischlicht aus dem Scheinwerfer austreten. Bei solchen Störfällen müssen daher Maßnahmen ergriffen werden, um eine Gefährdung der Verkehrsteilnehmer durch Laserstrahlen zu vermeiden. Voraussetzung hierfür ist, dass bei dem Scheinwerfer überprüft werden kann, ob sich das Photolumineszenzelement wie gefordert im Strahlengang der Laserlichtquelle befindet. Eine Beleuchtungsvorrichtung mit den Merkmalen des Oberbegriffs des Anspruchs 1 ist in der US 2011/063115 A1 beschrieben.

Die Aufgabe der Erfindung besteht darin, die Betriebssicherheit eines Kfz-Scheinwerfers mit Laserlichtquelle zu erhöhen. Insbesondere soll zuverlässig erkannt werden, ob die Gefahr besteht, dass gefährliches Laserlicht austreten kann.

Diese Aufgabe wird durch ein Lichtmodul gemäß Anspruch 1 gelöst, welches insbesondere für einen Kfz-Scheinwerfer zur Bereitstellung von Abblendlicht oder Fernlichtmodulen Verwendung finden kann.

Das Lichtmodul umfasst wenigstens eine Laserlichtquelle zur Ausstrahlung eines Primärlichtbündels in einen Primärraumwinkelbereich um eine Primärstrahlachse. Im Strahlengang folgend ist ein Photolumineszenzelement vorgesehen, welches derart angeordnet ist, dass das mit der Laserlichtquelle ausstrahlbare Primärlichtbündel auf das Photolumineszenzelement trifft, und welches derart ausgebildet ist, dass durch das auftreffende Primärlichtbündel eine Sekundärlichtverteilung unter Ausnutzung von Photolumineszenz ausstrahlbar ist. Ferner ist eine Abstrahloptikeinrichtung zur Umformung der Sekundärlichtverteilung in eine Abstrahllichtverteilung des Lichtmoduls vorgesehen. Das Lichtmodul weist wenigstens eine Detektionseinrichtung auf, mittels welcher feststellbar ist, wenn die Strahlungsintensität von Lichtbündeln, welche im Strahlengang nach dem Photolumineszenzelement in dem Primärraumwinkelbereich um die Primärstrahlachse verlaufen, einen Sicherheitsgrenzwert überschreitet.

Das Photolumineszenzelement dient zur Umwandlung des z.B. monochromatischen Laserlichts in das Licht der Sekundärlichtverteilung. Das kollimierte, kohärente und damit potenziell gefährliche Laserlicht wird in ein zumindest teilweise diffuses, inkohärentes, polychromatisches oder weißes Mischlicht umgewandelt, welches das Gefährdungspotenzial von Laserlicht im Wesentlichen nicht mehr aufweist. Die Ausstrahlung der Sekundärlichtverteilung erfolgt insbesondere durch teilweise Umwandlung des Primärlichtbündels über Photolumineszenz und durch teilweise (insbesondere diffuse und/oder inkohärente) Streuung des Primärlichtbündels am Photolumineszenzelement. Das umgewandelte Licht mit veränderter Wellenlänge kann sich mit dem an dem Photolumineszenzelement gestreuten Licht additiv zu z.B. weißem Licht mischen.

Im störungsfreien Normalfall ergibt sich daher folgender Strahlengang: Ausgehend von der als Primärlichtquelle wirkenden Laserlichtquelle verläuft ein Primärlichtbündel (Laserlicht) in dem Primärraumwinkelbereich um die Primärstrahlachse. Dabei kann die Laserlichtquelle neben der eigentlich lichterzeugenden Einrichtung (z.B. optisch aktive Fläche einer Laserdiode) auch Strahlformungsmittel oder Strahlführungsmittel umfassen, welche das Primärlichtbündel in den Primärraumwinkelbereich um die Primärstrahlachse lenken. Beispielsweise kann die Laserlichtquelle eine Laserdiode und einen Primärlichtleiter (z.B. Glasfaser) umfassen, in welchen das von der Laserdiode ausgestrahlte Licht einkoppelbar ist und in den Primärraumwinkelbereich um die Primärstrahlachse geführt wird.

Das von der Laserlichtquelle ausgestrahlte Primärlichtbündel trifft im störungsfreien Normalfall auf das Photolumineszenzelement. Dieses gibt durch Anregung zur Photolumineszenz und/oder durch Streuung die Sekundärlichtverteilung ab. Die Lichtstrahlen der Sekundärlichtverteilung treffen auf die Abstrahloptikeinrichtung und werden von dieser in die, vorzugsweise im Wesentlichen um eine Hauptabstrahlrichtung des Lichtmoduls konzentrierte, Abstrahllichtverteilung umgeformt (d.h. umlenkt und/oder reflektiert und/oder projiziert).

Insofern wirkt das Photolumineszenzelement für die Abstrahloptikeinrichtung als die eigentliche Lichtquelle, deren Sekundärlichtverteilung das Gefährdungspotenzial von Laserlicht im Wesentlichen nicht mehr aufweist. Das potenziell gefährliche Laserlicht im Primärlichtbündel gelangt daher nicht direkt in die Abstrahllichtverteilung. Das Photolumineszenzelement gewährleistet somit im Normalbetrieb die Einhaltung der eingangs geschilderten Sicherheitsanforderungen.

Die Detektionseinrichtung ermöglicht es, im Betrieb des Lichtmoduls einen außergewöhnlichen Anstieg der Strahlungsintensität im Strahlengang nach dem Photolumineszenzelement zu erkennen. Diese kann ein Hinweis darauf sein, dass das Photolumineszenzelement z.B. aufgrund mechanischer Einflüsse, eines Unfalls oder Konstruktionsfehlers nicht mehr im Strahlengang des Primärlichtbündels angeordnet ist (z.B. zerbrochen oder verschoben ist).

Es können dann Maßnahmen getroffen werden, um eine Gefährdung der Verkehrsteilnehmer durch Laserstrahlen zu vermeiden. Insbesondere kann bei Feststellung einer Intensitätszunahme die Laserlichtquelle deaktiviert werden. Das erfindungsgemäße Lichtmodul macht daher Laserlichtquellen für Kfz-Scheinwerfer unter Einhaltung der Sicherheitsanforderungen nutzbar. Durch Deaktivierung der Laserlichtquelle nach Detektion eines Störfalls kann außerdem verhindert werden, dass durch den nicht ordnungsgemäß auf das Photolumineszenzelement treffenden Laserstrahl eine Beschädigung der Bauteile des Lichtmoduls oder z.B. eine Entzündung des Lichtmoduls auftritt. So kann nicht nur eine Gefährdung von Verkehrsteilnehmern durch den Laserstrahl, sondern auch ein weitergehender Schaden am Lichtmodul verhindert werden.

Der Strahlengang nach dem Photolumineszenzelement wird in einen Kontrollstrahlengang für ein Kontrolllichtbündel und einen Sekundärlichtstrahlengang für die Sekundärlichtverteilung (zumindest virtuell) aufgeteilt. Die Detektionseinrichtung überwacht eine Intensitätszunahme im Kontrollstrahlengang. Die Sekundärlichtverteilung speist die Abstrahllichtverteilung des Lichtmoduls. Da das Photolumineszenzelement eine im Vergleich zu dem Primärlichtbündel wenig kollimierte und stärker diffuse und homogene Sekundärlichtverteilung abgibt, entfällt in den Primärraumwinkelbereich um die Primärstrahlachse nur ein geringer Teil der Leistung der Laserlichtquelle. Im Normalbetrieb ist daher der Einfluss der Detektionseinrichtung auf die Abstrahllichtverteilung vernachlässigbar. Insbesondere sind Ausgestaltungen denkbar, bei welchen im Kontrollstrahlengang im Normalbetrieb gar keine Strahlungsleistung auftritt und insofern im Normalbetrieb kein Kontrolllichtbündel im Kontrollstrahlengang verläuft.

Bei der erfindungsgemäßen Ausgestaltung kann außerdem ein in dem Primärraumwinkelbereich um die Primärstrahlachse verlaufender Laserstrahl im Innern der Beleuchtungsvorrichtung kontrolliert beendet werden, um Gefährdungen auszuschließen. Hierzu kann die Detektionseinrichtung ein Absorberelement aufweisen, welches die Strahlung im Kontrollstrahlengang ggf. nach Detektion absorbiert. Im Störfall kann eine weitere Beschädigung des Lichtmoduls (z.B. durch starke Erwärmung der Detektionseinrichtung oder des Absorberelements) vermieden werden, indem die Laserlichtquelle abgeschaltet wird.

Zumindest ein Abschnitt oder ein Bauteil der Detektionseinrichtung ist im Strahlengang hinter dem Photolumineszenzelement (und z.B. vor der Abstrahloptikeinrichtung) an einem Ort angeordnet, welchen das Primärlichtbündel der Laserlichtquelle in Abwesenheit des Photolumineszenzelements durchstrahlen würde. Allgemein ist die Detektionseinrichtung zur Erkennung einer Intensitätszunahme von Lichtbündeln eingerichtet, welche im Strahlengang nach dem Photolumineszenzelement in dem Primärraumwinkelbereich um die Primärstrahlachse verlaufen. Der Sicherheitsgrenzwert kann so gewählt sein, dass eine Gefährdung der Verkehrsteilnehmer durch Blendung oder durch Laserlicht vermieden werden kann. Die Detektionseinrichtung muss keine Messeinrichtung zur absoluten Intensitätsmessung sein. Denkbar ist z.B. eine Detektionseinrichtung, die ein wärmeaktivierbares, pyrotechnisches Element aufweist, welches eine Lichtabgabe unterbindet, wenn die Intensität einen Aktivierungsgrenzwert überschreitet. Dies kann zum Beispiel dadurch geschehen, dass durch Zündung des pyrotechnischen Elements ein optisch wirksamer Abschnitt des Lichtmoduls zerstört oder eine elektrische Leitung der Laserlichtquelle getrennt wird.

Wie erläutert wird ein Störfall dadurch erkannt, dass die Detektionseinrichtung einen Intensitätsanstieg über einen Sicherheitsgrenzwert erkennt. Um dies zu erreichen, ist die Detektionseinrichtung insbesondere empfindlich im Bereich der Wellenlänge des von der Laserlichtquelle ausgestrahlten Primärlichtbündels ausgebildet.

Andererseits kann eine Überwachung auf einen Störfall auch dadurch erfolgen, dass die Intensität des umgewandelten Lichts der Sekundärlichtverteilung unter einen Funktionskontrollwert abfällt. Dies kann zusätzlich zu oder anstelle der Überwachung einer Überschreitung des Sicherheitsgrenzwertes erfolgen. Die Detektionseinrichtung kann dann für die Wellenlänge (oder den Wellenlängenbereich) des von der Laserlichtquelle ausgestrahlten Primärlichtbündels unempfindlich ausgebildet sein. Beispielsweise kann die Detektionseinrichtung nur für den Wellenlängenbereich des mittels Photolumineszenz ausgestrahlten Lichts empfindlich sein (was z.B. durch einen spektralen Filter erzielt werden kann). Zur Erkennung eines Störfalls ist die Detektionseinrichtung dann derart ausgebildet und angeordnet, dass detektierbar ist, wenn die erfasste Strahlungsintensität einen Funktionskontrollwert unterschreitet. So kann detektiert werden, wenn kein oder weniger umgewandeltes Licht (der Sekundärlichtverteilung) vorhanden ist. Bei dieser Lösung ist es nicht zwingend erforderlich, dass die Intensität oder die Intensitätsänderung in dem Primärraumwinkelbereich um die Primärstrahlachse detektiert wird. Es genügt, wenn die Messung in einem Bereich der Sekundärlichtverteilung erfolgen kann.

Die Detektionseinrichtung ist zur Messung der absoluten Strahlungsintensität von in dem Primärraumwinkelbereich um die Primärstrahlachse verlaufenden Lichtbündeln ausgebildet.

Es ist wenigstens eine Referenzdetektionseinrichtung vorgesehen, mittels welcher eine Referenzstrahlungsintensität der Sekundärlichtverteilung außerhalb des Primärraumwinkelbereichs um die Primärstrahlachse messbar ist. Dies ermöglicht es, Einflüsse von Gesamtintensitätsschwankungen der Laserlichtquelle auf die Überwachung auszugleichen. Ein gefährlicher Störfall kann so zuverlässig erkannt werden. Vorzugsweise ist der genannte Sicherheitsgrenzwert in Abhängigkeit der Referenzstrahlungsintensität festlegbar.

Die Referenzdetektionseinrichtung kann derart eingerichtet sein, dass detektierbar ist, wenn die erfasste Strahlungsintensität einen Funktionskontrollwert unterschreitet. Dies ermöglicht eine unabhängige Überwachung darauf, ob die Umwandlung des Laserlichts des Primärlichtbündels noch ordnungsgemäß erfolgt.

Das Lichtmodul weist vorzugsweise eine Steuereinrichtung zur Ansteuerung der Laserlichtquelle zur Lichtabgabe, insbesondere zur Aktivierung und Deaktivierung der Laserlichtquelle, auf. Die Steuereinrichtung wirkt insbesondere mit der Detektionseinrichtung derart zusammen, dass die Laserlichtquelle deaktiviert wird, wenn mittels der Detektionseinrichtung eine Überschreitung des Sicherheitsgrenzwertes festgestellt wird.

Eine besonders zuverlässige Überwachung wird dadurch gewährleistet, dass die Steuereinrichtung derart ausgebildet ist, dass der Sicherheitsgrenzwert in Abhängigkeit der Referenzstrahlungsintensität bestimmbar ist.

Vorzugsweise ist die Steuereinrichtung derart eingerichtet, dass die Lichtabgabe unterbunden werden kann, wenn die Differenz zwischen einer mit der Detektionseinrichtung messbaren Strahlungsintensität und der Referenzstrahlungsintensität einen vorgebbaren Differenzhöchstwert überschreitet. Dieser kann z.B. gleich oder geringfügig oberhalb einer charakteristischen Intensitätsdifferenz gewählt werden, welche sich bei ordnungsgemäßer Wirkung des Photolumineszenzelements im Betrieb der Laserlichtquelle einstellt. Der Differenzhöchstwert kann vorzugsweise in der Steuereinrichtung hinterlegt werden. Durch die genannten Ausgestaltungen wird auf einfache Weise eine Abstimmung des Sicherheitsgrenzwertes auf die Referenzstrahlungsintensität ermöglicht.

Die Steuereinrichtung kann außerdem dazu eingerichtet sein, Signale von weiteren Sensoren eines Kfz auszuwerten, deren Messergebnisse auf einen Unfall hinweisen können, wobei die Laserlichtquelle im Falle eines auf einen Unfall hinweisenden Signals deaktiviert wird. Geeignete Sensorsignale sind beispielsweise die eines Airbag-Auslösesensors, oder die Signale von Beschleunigungssensoren eines ABS- und/oder ESP-Systems.

Die Detektionseinrichtung kann neben dem eigentlichen Intensitätsdetektionsmittel (Detektorelement) auch weitere, optisch wirksame Einrichtungen umfassen. Beispielsweise kann die Detektionseinrichtung ein im Strahlengang nach dem Photolumineszenzelement (und insbesondere vor der Abstrahloptikeinrichtung) angeordnetes Umlenkreflektorelement aufweisen, welches derart ausgebildet ist, dass die im Strahlengang nach dem Photolumineszenzelement in dem Primärraumwinkelbereich um die Primärstrahlachse verlaufenden Lichtbündel zu dem Detektorelement umgelenkt werden. Das Umlenkreflektorelement ist z.B. als Umlenkprisma oder Umlenkspiegel ausgebildet.

Zur weiteren Ausgestaltung kann das Lichtmodul ein Abstrahlhemmungsmittel aufweisen, welches derart ausgebildet und angeordnet ist, dass die Umformung in die Abstrahllichtverteilung für solche Lichtbündel geschwächt oder unterdrückt werden kann, welche in dem Primärraumwinkelbereich um die Primärstrahlachse verlaufen. Das Abstrahlhemmungsmittel ist insbesondere an der Abstrahloptikeinrichtung angeordnet, zum Beispiel in einem Bereich, in welchem ein in dem Primärraumwinkelbereich um die Primärstrahlachse verlaufendes Lichtbündel erstmals auf die Abstrahloptikeinrichtung auftrifft. Das Abstrahlhemmungsmittel kann zum Beispiel als reflektierende oder absorbierende Blende ausgebildet sein. Die Blende kann als ein mit einer lichtabsorbierenden oder reflektierenden Beschichtung versehener Bereich der Abstrahloptikeinrichtung, beispielsweise einer Projektionslinse oder eines Reflektors der Abstrahloptikeinrichtung, realisiert sein.

Zur weiteren Erhöhung der Betriebssicherheit kann das Lichtmodul ein Streuelement aufweisen, welches im Strahlengang vor dem Photolumineszenzelement und/oder nach dem Photolumineszenzelement und insbesondere vor der Abstrahloptikeinrichtung angeordnet ist. Das Streuelement ist derart ausgebildet, dass eventuelle im Primärraumwinkelbereich um die Primärstrahlachse verlaufende Laserstrahlen zusätzlich gestreut werden können. Denkbar ist auch, dass das Streuelement sämtliche Lichtstrahlen im Strahlengang nach dem Photolumineszenzelement streut. Die Überwachung auf Überschreitung des Sicherheitsgrenzwertes ist auch dann möglich, wenn ein solches Streuelement im Strahlengang zwischen Photolumineszenzelement und Detektionseinrichtung wirksam ist.

Das Streuelement kann beispielsweise als streuender Reflektor oder als ein zur Lichtstreuung ausgebildetes Dielektrikum oder Glaselement im Strahlengang nach dem Photolumineszenzelement (z.B. an oder in der Nähe der Abstrahloptikeinrichtung) ausgestaltet sein. Das Streuelement gewährleistet, dass auch dann keine ungestreuten Laserstrahlen das Lichtmodul verlassen können, wenn sich das Photolumineszenzelement nicht wie vorgesehen im Strahlengang befindet.

Nach einer bevorzugten Ausgestaltung des Lichtmoduls umfasst die Abstrahloptikeinrichtung eine Reflektorfläche, welche einen lochartigen Durchbruch aufweist. Die Detektionseinrichtung ist dann derart ausgebildet, dass die Detektion hinsichtlich der Überschreitung des Sicherheitsgrenzwertes für solche (Kontroll-)Lichtbündel erfolgen kann, welche durch den Durchbruch hindurchstrahlen. Bei dieser Ausgestaltung wird das Kontrolllichtbündel aus der Sekundärlichtverteilung entfernt und nicht in die Abstrahllichtverteilung umgeformt.

Der Durchbruch durch die Reflektorfläche ist vorzugsweise gerade so in seiner Ausdehnung bemessen, dass nur solche Lichtbündel durchtreten können, welche im Strahlengang nach dem Photolumineszenzelement in den Primärraumwinkelbereich um die Primärstrahlachse verlaufen. Im Strahlengang nach dem Durchbruch kann ein Absorber vorgesehen sein, um (ggf. nach Detektion) das Lichtbündel kontrolliert zu beenden.

Die Abstrahloptikeinrichtung kann als Reflektoranordnung mit wenigstens einem Reflektor, z.B. parabolischer Reflektor, ausgebildet sein. Ebenso ist möglich, dass die Abstrahloptikeinrichtung als Projektionseinrichtung, z.B. umfassend eine Projektionslinse, ausgebildet ist. Denkbar sind auch Kombinationen von wenigstens einem Reflektor und wenigstens einer Projektionslinse.

Vorzugsweise ist die Abstrahloptikeinrichtung derart ausgebildet, dass wenigstens ein Brennpunkt oder eine Brennlinie definiert ist, so dass von dem Brennpunkt oder der Brennlinie ausgehende, divergierende Lichtbündel in Parallellichtbündel der Abstrahllichtverteilung umgeformt werden. Das Photolumineszenzelement ist vorzugsweise in dem Brennpunkt oder auf der Brennlinie angeordnet.

Das Photolumineszenzelement weist vorzugsweise wenigstens eine Lichtdurchtrittsfläche (z.B. Lichteintrittsfläche und Lichtaustrittsfläche) sowie eine Reflexionsfläche auf. Beispielsweise ist das Photolumineszenzelement plattenartig ausgebildet, wobei eine Lichtdurchtrittsfläche und Reflexionsfläche einander gegenüberliegen. An der Reflexionsfläche werden solche Lichtstrahlen reflektiert, die durch die Lichtdurchtrittsfläche treten.

Die Reflexionsfläche und die Detektionseinrichtung sind vorzugsweise derart in Bezug aufeinander angeordnet, dass die in dem Primärraumwinkelbereich um die Primärstrahlachse verlaufenden Lichtbündel derart reflektiert werden, dass sie nicht auf die Detektionseinrichtung treffen. Insofern liegt die Reflexionsfläche zwischen Laserlichtquelle und Detektionseinrichtung. Die Detektionseinrichtung wird durch die Reflexionsfläche gegenüber den im Primärraumwinkelbereich um die Primärstrahlachse verlaufenden Lichtbündeln abgeschattet. Der Normalbetrieb zeichnet sich bei der Ausgestaltung dadurch aus, dass nach dem Photolumineszenzelement keine nennenswerte Strahlungsintensität in dem Primärraumwinkelbereich um die Primärstrahlachse vorliegt. Insbesondere ist die Reflexionsfläche derart ausgerichtet, dass die gesamte, durch die Lichtdurchtrittsfläche in das Photolumineszenzelement eintretende Lichtenergie in die Sekundärlichtverteilung umgelenkt wird. Im Normalbetrieb geht insofern keine Leistung in dem Kontrollstrahlengang verloren.

Befindet sich hingegen das Photolumineszenzelement bei einem Störfall nicht mehr im Strahlengang der Laserlichtquelle, so ist die Detektionseinrichtung nicht mehr durch die Reflexionsfläche verschattet. In diesem Fall ist mit der Detektionseinrichtung eine Intensität messbar. Somit kann bei dieser Ausgestaltung der Sicherheitsgrenzwert gerade Null gewählt werden. Die Reflexionsfläche des Photolumineszenzelements kann auf einfache Weise dadurch realisiert werden, dass eine Fläche des Photolumineszenzelements metallisiert oder mit einer Spiegelschicht versehen wird.

Die Wirkung der Reflexionsfläche ist im Strahlengang mit der Wirkung des Photolumineszenzelement zur Lichtumwandlung gekoppelt. Befindet sich das Photolumineszenzelement nicht ordnungsgemäß im Strahlengang des Primärlichtbündels, so ist auch die Reflexionsfläche nicht wirksam. Eine Ablenkung des Lichts von der Detektionseinrichtung findet dann nicht statt und es kann ein Intensitätsanstieg detektiert werden.

Eine vorteilhafte Ausgestaltung des Lichtmoduls ergibt sich dadurch, dass eine erste Laserlichtquelle und eine zweite Laserlichtquelle vorgesehen sind. Die erste Laserlichtquelle ist zur Ausstrahlung eines ersten Primärlichtbündels in einen ersten Primärraumwinkelbereich um eine erste Primärstrahlachse ausgebildet. Entsprechend ist die zweite Laserlichtquelle zur Ausstrahlung eines zweiten Primärlichtbündels in einem zweiten Raumwinkelbereich um eine zweite Primärstrahlachse ausgebildet. Insbesondere ist ein gemeinsames Photolumineszenzelement vorgesehen, welches für beide Primärlichtbündel wirksam ist. Das Photolumineszenzelement ist dann derart angeordnet, dass sowohl das erste, als auch das zweite Primärlichtbündel auf das Photolumineszenzelement treffen. Dabei ist eine erste Detektionseinrichtung zur Detektion von Lichtbündeln im Strahlengang nach dem Photolumineszenzelement in dem ersten Primärraumwinkelbereich in die erste Primärstrahlachse vorgesehen. Entsprechend kann mit einer zweiten Detektionseinrichtung der zweite Primärraumwinkelbereich um die zweite Primärstrahlachse überwacht werden.

Derartige Ausgestaltungen ermöglichen es, das Lichtmodul mit mehreren Laserlichtquellen zu speisen. Für jede Laserlichtquelle ist so eine unabhängige Sicherheitsüberwachung möglich. Die Primärstrahlachsen der verschiedenen Laserlichtquellen können miteinander einen Winkel einschließen. Vorzugsweise schneiden sich die Primärstrahlachsen der verschiedenen Laserlichtquellen in einem Brennpunkt der Abstrahloptikeinrichtung. In diesem Brennpunkt ist vorzugsweise das gemeinsame Photolumineszenzelement angeordnet. Abweichend hiervon ist jedoch auch denkbar, dass die erste und die zweite Laserlichtquelle beide in denselben Primärraumwinkelbereich um eine gemeinsame Primärstrahlachse abstrahlen, und insofern die Laserlichtquelle von mehreren Laserleuchtmitteln gespeist wird. In diesem Fall kann eine Überwachung mit einer gemeinsamen Detektionseinrichtung erfolgen. Wiederum andererseits können auch zwei oder mehrere Laserlichtquellen mit jeweils zugeordneten, unabhängigen Photolumineszenzelementen vorgesehen sein. Insbesondere ist dann für jedes Photolumineszenzelement je eine Detektionseinrichtung der vorstehend beschriebenen Art vorgesehen.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschrieben und erläutert sind.

Es zeigen:
Figur 1 skizzierte Darstellung eines erfindungsgemäßen Lichtmoduls im störungsfreien Betrieb;
Figur 2 Lichtmodul gemäß Figur 1 im Störfall mit zerstörtem Photolumineszenzelement;
Figur 3 weitere Ausführungsform eines erfindungsgemäßen Lichtmoduls;
Fig. 4
und 5 wiederum weitere Ausführungsform eines erfindungsgemäßen Lichtmoduls im Normalbetrieb und im Störfall;
Fig. 6
bis 9 weitere Ausgestaltungen der erfindungsgemäßen Lichtmodule;

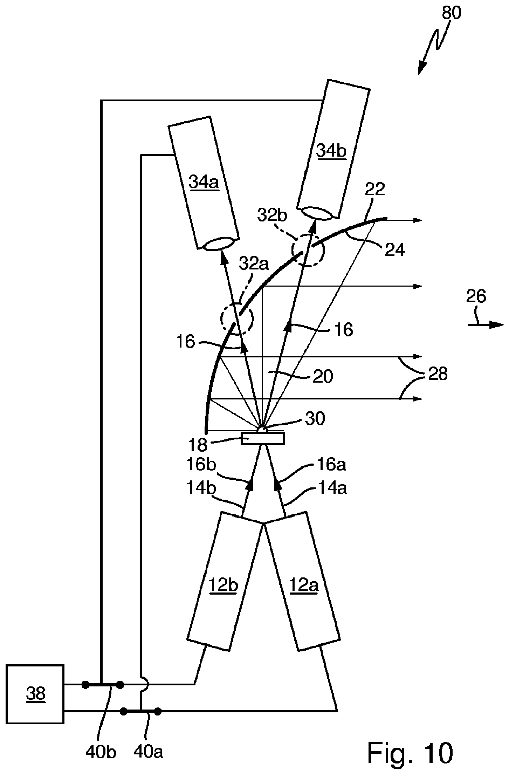

Figur 10 Ausführungsform mit mehreren Laserlichtquellen;
Fig. 11
und 12 weitere Ausführungsform eines erfindungsgemäßen Lichtmoduls.

Für identische oder einander entsprechende Bauteile oder Merkmale sind in der nachfolgenden Beschreibung und in den Figuren jeweils dieselben Bezugszeichen verwendet.

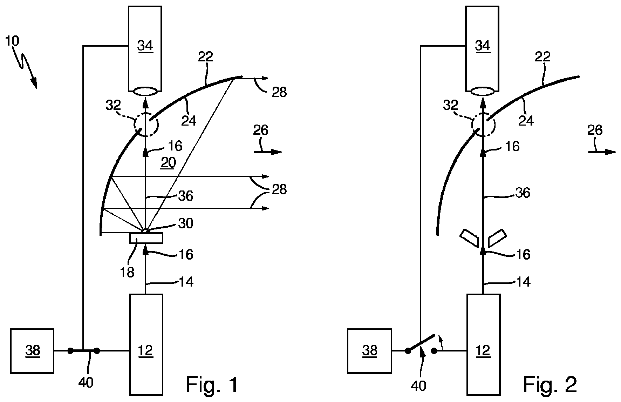

Die Figur 1 zeigt ein Lichtmodul 10 mit einer Laserlichtquelle 12. Diese strahlt ein Primärlichtbündel 14 an Laserlicht aus, welches um eine mit Pfeilspitzen angedeutete Primärstrahlachse 16 in einem kleinen Primärraumwinkelbereich konzentriert ist (d.h. ein Laserlichtbündel mit einer typischen, geringen Divergenz).

In dem in der Figur 1 dargestellten Normalebtrieb trifft das Primärlichtbündel 14 auf ein Photolumineszenzelement 18, welches im Strahlengang des Primärlichtbündels 16 der Laserlichtquelle 12 angeordnet ist. Das Photolumineszenzelement 18 ist dazu eingerichtet, das Laserlicht des Primärlichtbündels 14 teilweise zu streuen und teilweise mittels Photolumineszenz in (inkohärentes) Licht einer von dem Laserlicht abweichenden Wellenlänge umzuwandeln. Für die vorliegenden Anwendungen kann das Photolumineszenzelement z.B. einen plattenartigen Träger aufweisen, welcher einen Photolumineszenzfarbstoff aufweist und teilweise lichtstreuend wirken kann.

Durch das auftreffende Primärlichtbündel 14 wird daher das Photolumineszenzelement 18 zur Ausstrahlung einer Sekundärlichtverteilung 20 veranlasst, welche einen im Vergleich zu dem Primärraumwinkelbereich deutlich größeren Sekundärraumwinkelbereich ausfüllt. Das Licht der Sekundärlichtverteilung 20 ist vorzugsweise inkohärent, polychromatisch oder weiß und weist die potenziell gefährlichen Eigenschaften von Laserlicht nicht mehr auf.

Das Lichtmodul 10 umfasst eine Abstrahloptikeinrichtung 22, welche im dargestellten Beispiel eine im Wesentlichen parabolisch gewölbte Reflektorfläche 24 aufweist. Die Abstrahloptikeinrichtung 22 ist dazu eingerichtet, die Sekundärlichtverteilung 20 in eine im Wesentlichen um eine Hauptabstrahlrichtung 26 des Lichtmoduls 10 konzentrierte Abstrahllichtverteilung 28 des Lichtmoduls 10 umzuformen (hier: umzulenken).

Die Reflektorfläche 24 der Abstrahloptikeinrichtung 22 ist im dargestellten Beispiel derart gewölbt, dass ein Brennpunkt 30 definiert ist (d.h. dass ein von dem Brennpunkt 30 ausgehendes, gedachtes, divergierendes Lichtbündel von der Reflektorfläche 24 in ein Parallellichtbündel umgelenkt wird). Der Brennpunkt 30 liegt vorzugsweise im optisch aktiven Bereich des Photolumineszenzelements 18.

Die Reflektorfläche 24 weist einen Durchbruch 32 auf. Dieser ist derart angeordnet und in seiner Ausdehnung bemessen, dass solche Lichtbündel, welche im Strahlengang nach dem Photolumineszenzelement 18 in dem Primärraumwinkelbereich um die Primärabstrahlrichtung 16 verlaufen, durch den Durchbruch 32 hindurchstrahlen und somit nicht in die Abstrahllichtverteilung 28 umgeformt werden.

Das Lichtmodul 10 umfasst eine Detektionseinrichtung 34. Im dargestellten Beispiel ist diese im Strahlengang nach dem Durchbruch 32 angeordnet und erfasst somit Lichtbündel, welche in dem Primärraumwinkelbereich um die Primärstrahlachse 16 verlaufen und durch den Durchbruch 32 hindurchtreten.

Die Detektionseinrichtung 34 ist grundsätzlich dazu eingerichtet, eine Zunahme der von der Detektionseinrichtung 34 erfassten Strahlungsintensität über einen Sicherheitsgrenzwert hinaus zu erfassen. Vorteilhaft ist jedoch insbesondere, wenn die Detektionseinrichtung 34 zur Messung der absoluten Strahlungsintensität der erfassten Lichtbündel ausgebildet ist.

Insofern wird der Strahlengang nach dem Photolumineszenzelement 18 in einen Kontrollstrahlengang für ein Kontrolllichtbündel 36, sowie in einem Sekundärlichtstrahlengang für die Sekundärlichtverteilung 20 aufgeteilt. Die Detektionseinrichtung 34 ist dazu eingerichtet, eine Zunahme der Intensität des Kontrolllichtbündels 36 im Kontrollstrahlengang auf einen Wert oberhalb des Sicherheitsgrenzwertes zu detektieren.

Das Lichtmodul 10 weist eine Steuereinrichtung 38 auf, mittels welcher die Laserlichtquelle 12 aktivierbar und deaktivierbar ist. Hierzu kann die Steuereinrichtung 38 eine Schalteinrichtung 40 ansteuern, um beispielsweise eine Spannungsversorgung der Laserlichtquelle 12 zu unterbrechen oder herzustellen.

Die Überwachung der Strahlungsintensität in dem Kontrolllichtbündel 36 ermöglicht eine Feststellung, ob sich das Photolumineszenzelement 18 ordnungsgemäß im Strahlengang der Laserlichtquelle 12 befindet und seine Funktion ausübt. In dem in der Figur 1 dargestellten störungsfreien Normalbetrieb des Lichtmoduls 10 besteht das Kontrolllichtbündel 36 aus Lichtstrahlen der Sekundärlichtverteilung 20, nämlich gerade solchen Lichtbündeln, welche im Strahlengang nach dem Photolumineszenzelement 18 in den Primärraumwinkelbereich um die Primärstrahlachse 16 verlaufen. Auf das Kontrolllichtbündel 36 entfällt daher nur ein vergleichsweise geringer Anteil der Strahlungsleistung der Sekundärlichtverteilung 20, welche letztlich die Abstrahllichtverteilung 28 des Lichtmoduls 10 speist.

Mit der Detektionseinrichtung 34 ist erkennbar, wenn die erfasste Strahlungsintensität einen Sicherheitsgrenzwert überschreitet, welcher beispielsweise gleich oder geringfügig oberhalb der Strahlungsintensität des Kontrolllichtbündels 36 im störungsfreien Normalbetrieb des Lichtmoduls 10 gewählt ist.

Die Steuereinrichtung 38 ist dann derart ausgebildet, dass die Laserlichtquelle deaktiviert wird, wenn die Strahlungsintensität des Kontrolllichtbündels 36 den Sicherheitsgrenzwert überschreitet.

Die Figur 2 zeigt das Lichtmodul 10 in einem Störfall, in dem sich das Photolumineszenzelement 18 nicht mehr im Strahlengang des Primärlichtbündels 14 der Laserlichtquelle 12 befindet (im dargestellten Beispiel ist das Photolumineszenzelement 18 zerbrochen). Ohne die Wirkung des Photolumineszenzelements 18 strahlt daher potenziell gefährliches Laserlicht in dem Primärraumwinkelbereich um die Primärstrahlachse 16 und durch den Durchbruch 32 in der Reflektorfläche 24. Somit umfasst das Kontrolllichtbündel 36 in diesem Fall nahezu die gesamte Strahlungsleistung der Laserlichtquelle 12.

Die Detektionseinrichtung 34 erkennt in diesem Fall, dass die Strahlungsintensität des Kontrolllichtbündels 36 (d.h. solcher Lichtbündel, welche in dem Primärraumwinkelbereich um die Primärstrahlachse 16 verlaufen), den Sicherheitsgrenzwert überschreitet.

Die Detektionseinrichtung 34 wirkt mit der Steuereinrichtung 38 und/oder der Schalteinrichtung 40 derart zusammen, dass bei Detektion einer Überschreitung des Sicherheitsgrenzwertes die Laserlichtquelle 12 deaktiviert werden kann. Dadurch kann verhindert werden, dass im Störfall weiterhin potenziell gefährliche Laserstrahlen von der Laserlichtquelle 12 abgegeben werden, die eine Gefährdung beispielsweise für Verkehrsteilnehmer darstellen können.

Zur weiteren Ausgestaltung kann die Detektionseinrichtung 34 ein nicht näher dargestelltes Absorberelement umfassen. Dieses ist vorzugsweise derart ausgebildet, dass das Kontrolllichtbündel 36 (gegebenenfalls mit der vollen Leistung des Primärlichtbündels 14) kontrolliert beendet werden kann.

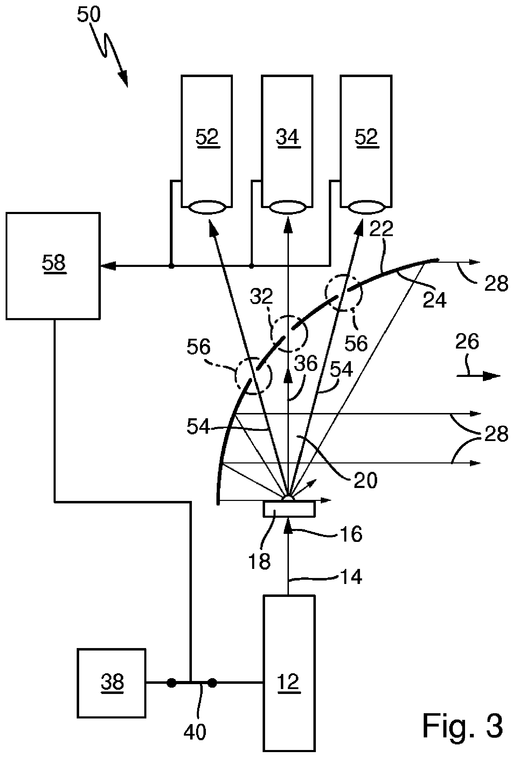

Die Figur 3 zeigt ein Lichtmodul 50, welches zusätzlich zu der Detektionseinrichtung 34 noch weitere (im dargestellten Beispiel zwei) Referenzdetektionseinrichtungen 52 aufweist.

Die Detektionseinrichtung 34 überwacht wiederum ein Kontrolllichtbündel 36, welches den Strahlengang nach dem Photolumineszenzelement 18 in dem Primärraumwinkelbereich um die Primärstrahlachse 16 verläuft. Demgegenüber ist die wenigstens eine Referenzdetektionseinrichtung 52 derart ausgebildet, dass die Strahlungsintensität eines Referenzlichtbündels 54 der Sekundärlichtverteilung 20 messbar ist. Dabei verläuft das Referenzlichtbündel 54 gänzlich außerhalb des Primärraumwinkelbereichs um die Primärstrahlachse 16 und überschneidet sich daher im Strahlengang nach dem Photolumineszenzelement 18 mit dem Kontrolllichtbündel 36 nicht.

Die Reflektorfläche 24 der Abstrahloptikeinrichtung 22 weist wenigstens einen Durchbruch 56 auf, durch welchen das Referenzlichtbündel 54 durchstrahlen kann. Die Referenzdetektionseinrichtung 52 ist derart angeordnet, dass das durch den Durchbruch 56 strahlende Referenzlichtbündel 54 von der Referenzdetektionseinrichtung 52 erfasst wird.

Die Detektionseinrichtung 34 und die Referenzdetektionseinrichtungen 52 sind vorzugsweise derart ausgebildet, dass eine absolute Strahlungsintensität messbar ist. Damit kann mit der wenigstens einen Referenzdetektionseinrichtung 52 eine Referenzstrahlungsintensität der Sekundärlichtverteilung 20 bestimmt werden (durch Messung der Strahlungsintensität des Referenzlichtbündels 54), mit welcher die Strahlungsintensität des Kontrolllichtbündels 36 verglichen werden kann.

Das Lichtmodul 50 kann eine Differenzmesseinrichtung 58 aufweisen, mittels welcher ein die Differenz zwischen der Strahlungsintensität des Kontrolllichtbündels 36 und der Referenzstrahlungsintensität repräsentierendes Messsignal erzeugt werden kann. Die Steuereinrichtung 38 ist vorzugsweise dazu eingerichtet, die Laserlichtquelle 12 zu aktivieren, wenn die Differenz zwischen der Strahlungsintensität des Kontrolllichtbündels 36 und der Referenzstrahlungsintensität einen Differenzhöchstwert überschreitet. Bei dieser Ausgestaltung wird die Laserlichtquelle 12 demnach dann deaktiviert, wenn die Detektionseinrichtung 34 feststellt, dass die Strahlungsintensität von in dem Primärraumwinkelbereich um die Primärstrahlachse 16 verlaufenden Lichtbündeln einen Sicherheitsgrenzwert überschreitet, welcher in Abhängigkeit der Referenzstrahlungsintensität festgelegt ist.

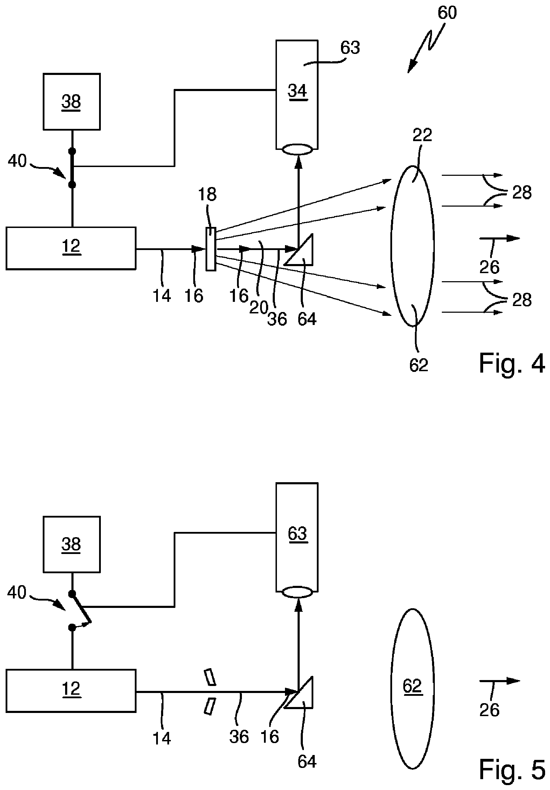

Bei dem in der Figur 4 dargestellten Lichtmodul 60 ist die Abstrahloptikeinrichtung 22 nicht als Reflektoranordnung ausgebildet, sondern umfasst eine Projektionslinse 62. Vorzugsweise definiert die Projektionslinse 62 einen Brennpunkt, in welchem das Photolumineszenzelement 18 des Lichtmoduls 60 angeordnet ist.

Das Lichtmodul 60 umfasst wiederum eine Detektionseinrichtung 34, mittels welcher festgestellt werden kann, wenn die Strahlungsintensität eines (im Strahlengang nach dem Photolumineszenzelement 18) in dem Primärraumwinkelbereich um die Primärstrahlachse 16 verlaufenden Kontrolllichtbündel 36 einen Sicherheitsgrenzwert überschreitet.

Die Detektionseinrichtung 34 umfasst einerseits ein eigentlich zur Detektion eingerichtetes Detektorelement 63, sowie ein als Umlenkprisma ausgebildetes Umlenkreflektorelement 64.

Im dargestellten Beispiel ist das eigentliche Detektorelement 63 in Richtung senkrecht zur Vorzugsrichtung der Sekundärlichtverteilung 20 nach dem Photolumineszenzelement 18 versetzt angeordnet. Das Detektorelement ist insbesondere derart ausgerichtet, dass es Lichtstrahlen erfasst, die sich im Wesentlichen senkrecht zur Vorzugsrichtung der Sekundärlichtverteilung 20 ausbreiten.

Das Umlenkreflektorelement 64 ist derart ausgebildet und in seiner Ausdehnung bemessen, dass das in dem Primärraumwinkelbereich um die Primärstrahlachse 16 verlaufende Kontrolllichtbündel 36 zu dem Detektorelement 63 umgelenkt wird und von diesem detektiert werden kann.

Befindet sich das Photolumineszenzelement 18 nicht mehr im Strahlengang des Primärlichtbündels 14, so wird über das Umlenkreflektorelement 64 das gesamte, in dem Primärraumwinkelbereich um die Primärstrahlachse 16 verlaufende Primärlichtbündel 14 zu dem Detektorelement 63 gelenkt. Dieser Störfall ist in der Figur 5 dargestellt.

Da das Umlenkreflektorelement 64 in diesem Störfall das Primärlichtbündel 14 im Wesentlichen senkrecht zur Hauptabstrahlrichtung 26 ablenkt, wird vermieden, dass potenziell gefährliche Laserstrahlen in Hauptabstrahlrichtung 26 gestrahlt werden. Im Störfall umfasst daher das Kontrolllichtbündel 36 im Wesentlichen die gesamte, von dem Photolumineszenzelement 18 unbeeinflusste Strahlung des Primärlichtbündels 14 in dem Primärraumwinkelbereich um die Primärstrahlachse 16. Um die Energie des Primärlichtbündels 14 kontrolliert zu absorbieren, kann das Detektorelement 63 ein nicht näher dargestelltes Absorberelement umfassen.

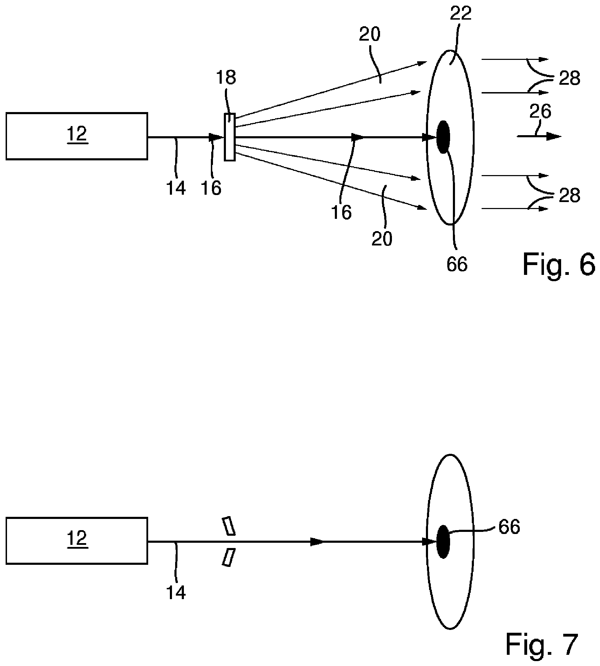

Um die Betriebssicherheit der erfindungsgemäßen Lichtmodule weiter zu erhöhen, kann im Strahlengang nach dem Photolumineszenzelement 18 ein beispielsweise als Blende 66 ausgebildetes Abstrahlhemmungsmittel vorgesehen sein. Dieses ist derart ausgebildet und angeordnet, dass die Umformung von Lichtbündeln in die Abstrahllichtverteilung 28 für solche Lichtbündel unterdrückt wird, welche in dem Primärraumwinkelbereich um die Primärstrahlachse 16 verlaufen (Figur 6).

In dem in der Figur 6 dargestellten Beispiel ist die Blende 66 an der Abstrahloptikeinrichtung 22 angeordnet. Die Anordnungsposition der Blende 66 ist beispielsweise der Bereich einer Lichteintrittsfläche der Abstrahloptikeinrichtung 22 (beispielsweise Lichteintrittsfläche einer Projektionslinse), in welchem ein in dem Primärraumwinkelbereich um die Primärstrahlachse 16 verlaufendes Lichtbündel erstmals auf die Abstrahloptikeinrichtung 22 trifft.

Befindet sich das Photolumineszenzelement 18 nicht mehr ordnungsgemäß im Strahlengang des Primärlichtbündels 14, so trifft der unumgewandelte Laserstrahl des Primärlichtbündels 14 auf die Blende 66. Diese ist vorzugsweise so ausgebildet, dass der Laserstrahl absorbiert werden kann. Durch die Blende 66 kann daher vermieden werden, dass potenziell gefährliche Laserstrahlen in die Abstrahllichtverteilung 28 gelangen (Figur 7).

Im störungsfreien Normalbetrieb, insbesondere bei intaktem Photolumineszenzelement 18, ist der Einfluss der Blende 66 auf die Abstrahllichtverteilung 28 gering. Dies ist darauf zurückzuführen, dass auf den Primärraumwinkelbereich um die Primärstrahlachse 16 nur ein vergleichsweise geringer Teil der gesamten Strahlungsleistung der Sekundärlichtverteilung 20 entfällt (Figur 6).

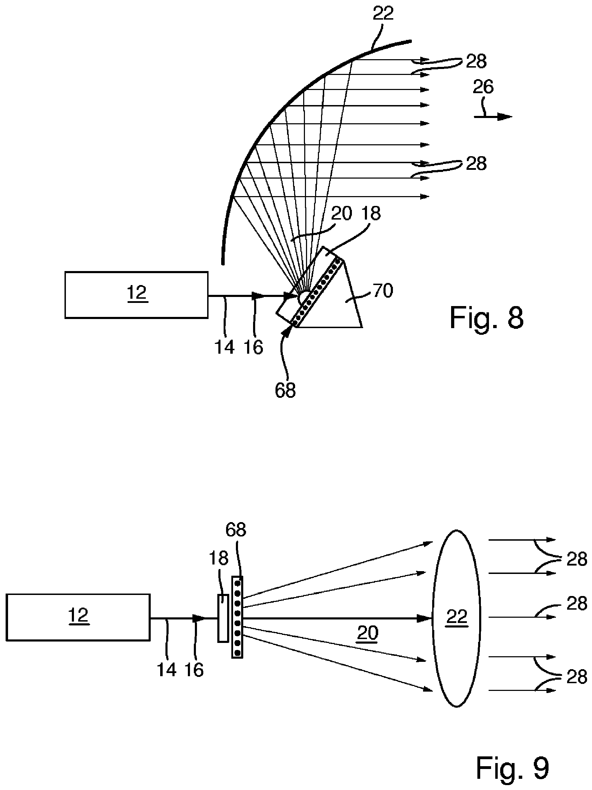

In den Figuren 8 und 9 sind weitere Maßnahmen zur Erhöhung der Betriebssicherheit der erfindungsgemäßen Lichtmodule dargestellt. Hierbei ist ein Streuelement 68 vorgesehen, mittels welchem Lichtbündel im Strahlengang nach dem Photolumineszenzelement zusätzlich gestreut werden können. Das Streuelement 68 kann dabei in seiner Ausdehnung derart bemessen sein, dass lediglich solche Lichtbündel gestreut werden, welche in dem Primärraumwinkelbereich um die Primärstrahlachse 16 verlaufen. Denkbar ist jedoch auch, dass das Streuelement 68 auf einen Großteil oder auf die gesamte Sekundärlichtverteilung 20 wirkt.

In der Figur 8 ist eine beispielhafte Ausgestaltung mit einer als Reflektoranordnung ausgebildeten Abstrahloptikeinrichtung 22 dargestellt. Das mit der Laserlichtquelle 12 ausstrahlbare Primärlichtbündel 14 trifft auf ein plattenartig ausgebildetes Photolumineszenzelement 18. Beim Durchstrahlen des Photolumineszenzelements 18 wird ein Teil des Primärlichtbündels 14 gestreut. Ein weiterer Anteil regt das Photolumineszenzelement 18 zur Photolumineszenz an. Ein wiederum weiterer Teil durchstahlt das Photolumineszenzelement 18 und trifft im weiteren Verlauf auf ein Reflektorelement 70, welches das Licht wiederum zurück durch das Photolumineszenzelement lenkt. Beim erneuten Durchstrahlen des Photolumineszenzelements 18 wird ein weiterer Anteil gestreut oder dient zur Anregung von Photolumineszenz. Dies ermöglicht die Umwandlung großer Laserintensitäten mit dünnen, z.B. plattenartigen Photolumineszenzelementen. Durch die redundante Wirkung eines Streuelements bzw. des Photolumineszenzelements 18 kann die Sicherheit erhöht werden.

Im Beispiel gemäß Figur 8 ist das Streuelement 68 ebenfalls plattenartig ausgebildet und zwischen dem Photolumineszenzelement 18 und dem Reflektorelement 70 angeordnet. Vorzugsweise liegt das Streuelement 68 an dem ebenfalls plattenartigen Photolumineszenzelement 18 unmittelbar an.

Im Falle der Figur 9 ist die Abstrahloptikeinrichtung 22 als Projektionssystem mit einer Projektionslinse ausgebildet, mittels welcher die von dem Photolumineszenzelement 18 abgegebenen Sekundärlichtverteilung 20 in die Abstrahllichtverteilung 28 projizierbar ist. Das Streuelement 68 ist dann beispielsweise als Streuplatte ausgebildet, welche im Strahlengang unmittelbar nach dem Photolumineszenzelement 18 angeordnet ist.

Die Figur 10 zeigt ein Lichtmodul 80, welches von mehreren Laserlichtquellen gespeist wird. Eine erste Laserlichtquelle 12a strahlt ein erstes Primärlichtbündel 14a in einem ersten Primärraumwinkelbereich um eine erste Primärstrahlachse 16a aus. Eine zweite Laserlichtquelle 12b strahlt ein zweites Primärlichtbündel 14b in einem zweiten Primärraumwinkelbereich um eine zweite Primärstrahlachse 16b aus. Die erste und die zweite Primärstrahlachse 16a und 16b schließen miteinander einen Winkel ein.

Das Lichtmodul 80 weist eine mit einer Reflektorfläche 24 ausgebildete Abstrahloptikeinrichtung 22 auf, welche einen Brennpunkt 30 definiert. In dem Brennpunkt 30 ist ein Photolumineszenzelement 18 angeordnet. Die Anordnung von Laserlichtquellen 12a, 12b und Abstrahloptikeinrichtung 22 ist derart ausgelegt, dass sich die Primärlichtbündel 14a und 14b in dem Brennpunkt 30 schneiden und somit das Photolumineszenzelement 18 gemeinsam für die Primärlichtbündel der ersten und zweiten Laserlichtquelle 12a und 12b wirkt.

Die Reflektorfläche 24 weist einen ersten Durchbruch 32a auf, durch welchen solche Lichtbündel hindurchtreten können, welche in dem ersten Primärraumwinkelbereich um die erste Primärstrahlachse 16a verlaufen. Außerdem weist die Reflektorfläche 24 einen zweiten Durchbruch 32b auf, durch welchen die in dem zweiten Primärraumwinkelbereich um die zweite Primärstrahlachse 16b verlaufenden Lichtbündel hindurchtreten können.

Das Lichtmodul 80 umfasst eine erste Detektionseinrichtung 34a und eine zweite Detektionseinrichtung 34b, mittels welchen die ordnungsgemäße Wirkung des Photolumineszenzelements 18 in Bezug auf beide Laserlichtquellen 12a und 12b unabhängig voneinander überprüft werden kann. Hierzu ist mit der ersten Detektionseinrichtung 34a detektierbar, ob die in dem ersten Primärraumwinkelbereich um die erste Primärabstrahlachse 16a verlaufenden Lichtbündel, welche durch den ersten Durchbruch 32a treten, eine Intensität oberhalb eines Sicherheitsgrenzwertes aufweisen. Entsprechend kann mit der zweiten Detektionseinrichtung 34b eine Überschreitung des Sicherheitsgrenzwertes für die Lichtbündel in dem zweiten Primärraumwinkelbereich um die zweite Primärstrahlachse 16b erfasst werden. Im Übrigen entspricht die Funktion im Wesentlichen der des zu Figur 1 erläuterten Lichtmoduls.

Stellt eine der beiden Detektionseinrichtungen 34a oder 34b oder beide Detektionseinrichtungen eine Überschreitung des Sicherheitsgrenzwertes fest, so deaktiviert die Steuereinrichtung 38 beispielsweise die jeweils zugeordnete Laserlichtquelle 12a oder 12b oder beide Laserlichtquellen. Hierzu sind entsprechend ansteuerbare erste und zweite Schalteinrichtungen 40a und 40b für die erste und zweite Laserlichtquelle 12a und 12b vorgesehen.

Selbstverständlich kann auch bei dem Lichtmodul 80 eine Referenzintensitätsmessung in der zu Figur 3 erläuterten Art erfolgen. Hierzu kann die Reflektorfläche 24 weitere Durchbrüche für Referenzlichtbündel aufweisen, welche mit entsprechender Referenzdetektionseinrichtungen erfasst werden.

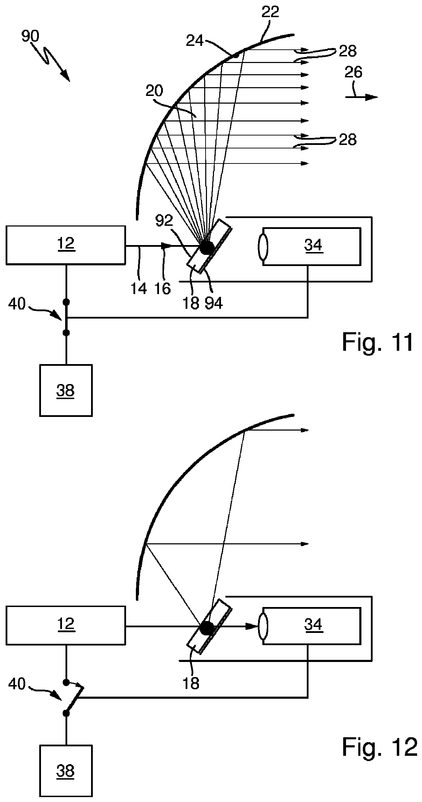

Ein weiteres Lichtmodul 90 ist in den Figuren 11 und 12 gezeigt. Dieses weist ein plattenartiges Photolumineszenzelement 18 auf. Das Photolumineszenzelement 18 hat eine Lichteintrittsfläche 92 sowie eine dieser gegenüberliegende Reflexionsfläche 94. Die Reflexionsfläche 94 ist beispielsweise dadurch gebildet, dass das plattenartige Photolumineszenzelement auf der seiner Lichteintrittsfläche 92 gegenüberliegenden Fläche verspiegelt wird.

Das so ausgestaltete Photolumineszenzelement 18 gibt eine Sekundärlichtverteilung 20 z.B. dadurch ab, dass das Primärlichtbündel 14 durch die Lichteintrittsfläche 92 in das Photolumineszenzelement 18 eingestrahlt wird und dort zumindest teilweise gestreut und teilweise mittels Photolumineszenz umgewandelt wird. Ein weiterer Anteil der Strahlungsintensität wird an die Reflexionsfläche 94 reflektiert und bei erneuter Durchstrahlung des Photolumineszenzelements 18 gegebenenfalls wiederum gestreut und/oder umgewandelt. Die Reflexionsfläche 94 ist insbesondere einstückig mit dem Photolumineszenzelement 18 verbunden.

Das Lichtmodul 90 weist eine Abstrahloptikeinrichtung 22 mit einer im dargestellten Beispiel durchgehend ausgebildeten Reflektorfläche 24 auf. Diese ist wiederum derart ausgeformt, dass die Sekundärlichtverteilung 20 in die Abstrahllichtverteilung 28 des Lichtmoduls 90 umgelenkt werden kann.

Die Detektionseinrichtung 34 des Lichtmoduls 90 ist derart angeordnet, dass in Abwesenheit des Photolumineszenzelements 18 das in dem Primärraumwinkelbereich um die Primärstrahlachse 16 ausgestrahlte Primärlichtbündel 14 auf die Detektionseinrichtung 34 treffen würde. Anders als bei dem beispielsweise in Figur 1 dargestellten Lichtmodul wird bei dem Lichtmodul 90 im Normalbetrieb (Figur 11) keine Strahlungsleistung der Sekundärlichtverteilung 20 in einem Kontrolllichtbündel zu der Detektionseinrichtung geführt. Dies ist darauf zurückzuführen, dass das Photolumineszenzelement 18 derart angeordnet ist, dass die Reflexionsfläche 94 die Detektionseinrichtung 34 gegenüber solchen Lichtbündeln abschattet, welche in dem Primärraumwinkelbereich um die Primärstrahlachse 16 verlaufen. Es geht somit keine Strahlungsleistung der Sekundärlichtverteilung 20 in der Detektionseinrichtung 34 verloren.

Das sich plattenartig erstreckende Photolumineszenzelement 18 ist vorzugsweise derart unter einem Winkel in Bezug auf die Primärstrahlachse 16 angeordnet, dass die von dem Primärlichtbündel 14 gespeiste Sekundärlichtverteilung 20 im Wesentlichen vollständig der Abstrahloptikeinrichtung 22 erfasst wird.

Die Reflexionsfläche 94 wirkt daher einerseits bei der Umwandlung des Primärlichtbündels 14 in die Sekundärlichtverteilung 20 mit, und schattet andererseits die Detektionseinrichtung 34 gegenüber den in dem Primärraumwinkelbereich um die Primärstrahlachse 16 verlaufenden Lichtbündeln ab.

Befindet sich in einem Störfall das Photolumineszenzelement 18 nicht mehr oder nicht mehr vollständig im Strahlengang des Primärlichtbündels 14 (vgl. Figur 12), so trifft zumindest ein Anteil des Primärlichtbündels 14 als Kontrolllichtbündel 96 auf die Detektionseinrichtung 34. Die Intensitätszunahme über den Sicherheitsgrenzwert (der in diesem Fall Null gewählt werden kann), kann dann mit der Detektionseinrichtung 34 erkannt werden. Wie vorstehend erläutert, kann dann die Laserlichtquelle 12 deaktiviert werden, um die Abgabe potenziell gefährlicher Laserstrahlung mit dem Lichtmodul 90 zu vermeiden.

Bei dem Lichtmodul 90 kann insofern bereits eine geringfügige, auf die Detektionseinrichtung 34 treffende Strahlungsintensität einen Störfall anzeigen. So können beispielsweise bereits kleine Risse oder Brüche im Photolumineszenzelement 18 detektiert werden.

## Patentansprüche

1. Lichtmodul (10, 50, 60, 80, 90) für KFZ-Scheinwerfer, umfassend: wenigstens eine Laserlichtquelle (12, 12a, 12b) zur Ausstrahlung eines Primärlichtbündels (14) in einen Primärraumwinkelbereich um eine Primärstrahlachse (16); ein Photolumineszenzelement (18), welches derart angeordnet ist, dass das mit der Laserlichtquelle (12) ausstrahlbare Primärlichtbündel (14) auf das Photolumineszenzelement (18) trifft, und welches derart ausgebildet ist, dass durch das auftreffende Primärlichtbündel (14) eine Sekundärlichtverteilung (20) unter Ausnutzung von Photolumineszenz ausstrahlbar ist; eine Abstrahloptikeinrichtung (22), welche derart ausgebildet ist, dass die Sekundärlichtverteilung (20) in eine Abstrahllichtverteilung (28) des Lichtmoduls umformbar ist; wenigstens eine Detektionseinrichtung (34, 34a, 34b), welche derart ausgebildet und angeordnet ist, dass detektierbar ist, wenn die Strahlungsintensität von Lichtbündeln, welche im Strahlengang nach dem Photolumineszenzelement (18) in dem Primärraumwinkelbereich um die Primärstrahlachse (16) verlaufen, einen Sicherheitsgrenzwert überschreitet, wobei die Detektionseinrichtung (34) zur Messung der Strahlungsintensität von in dem Primärraumwinkelbereich um die Primärstrahlachse verlaufenden Lichtbündeln ausgebildet ist,
**dadurch gekennzeichnet, dass** eine Referenzdetektionseinrichtung (52) vorgesehen ist, welche derart ausgebildet und angeordnet ist, dass eine Referenzstrahlungsintensität der Sekundärlichtverteilung (20) außerhalb des Primärraumwinkelbereichs um die Primärstrahlachse (16) messbar ist.

2. Lichtmodul nach Anspruch 1, **dadurch gekennzeichnet, dass** eine Steuereinrichtung (38) zur Ansteuerung der Laserlichtquelle zur Lichtabgabe vorgesehen ist, welche derart mit der Detektionseinrichtung (34) zusammenwirkt, dass eine Lichtabgabe der Laserlichtquelle (12) bei Überschreitung des Sicherheitsgrenzwertes unterbindbar ist.

3. Lichtmodul nach wenigstens Anspruch 1 und 2, **dadurch gekennzeichnet, dass** Steuereinrichtung (38) derart ausgebildet ist, dass der Sicherheitsgrenzwert in Abhängigkeit der Referenzstrahlungsintensität festlegbar ist.

4. Lichtmodul nach einem der vorhergehenden Ansprüche, **dadurch gekennzeichnet, dass** die Detektionseinrichtung (34) ein im Strahlengang nach dem Photolumineszenzelement (18) angeordnetes Umlenkreflektorelement (64) umfasst, welches derart ausgebildet ist, dass im Strahlengang nach dem Photolumineszenzelement (18) in dem Primärraumwinkelbereich um die Primärstrahlachse (16) verlaufende Lichtbündel zu einem Detektorelement (63) der Detektionseinrichtung (34) umgelenkt werden.

5. Lichtmodul nach einem der vorherigen Ansprüche, **dadurch gekennzeichnet, dass** die Abstrahloptikeinrichtung (22) eine Reflektorfläche (24) umfasst, welche einen Durchbruch (32) aufweist, wobei die Detektionseinrichtung (34) derart ausgebildet ist, dass die Detektion für solche Lichtbündel erfolgt, welche durch den Durchbruch (32) durchstrahlen.

6. Lichtmodul nach einem der vorherigen Ansprüche, **dadurch gekennzeichnet, dass** die Abstrahloptikeinrichtung (22) derart ausgebildet ist, dass wenigstens ein Brennpunkt (30) oder eine Brennlinie definiert ist, wobei der Brennpunkt (30) oder die Brennlinie auf dem Photolumineszenzelement (18) liegt.

7. Lichtmodul nach einem der vorherigen Ansprüche, **dadurch gekennzeichnet, dass** das Photolumineszenzelement (18) wenigstens eine Lichtdurchtrittsfläche (92) und eine Reflexionsfläche (94) aufweist, an welcher durch die Lichtdurchtrittsfläche (92) tretende Lichtstrahlen reflektiert werden können, wobei die Reflexionsfläche (94) und/oder die Detektionseinrichtung (34) derart angeordnet ist, dass in dem Primärraumwinkelbereich um die Primärstrahlachse (16) verlaufende Lichtbündel derart reflektiert werden, dass sie nicht auf die Detektionseinrichtung (34) treffen.

8. Lichtmodul nach einem der vorherigen Ansprüche, **dadurch gekennzeichnet, dass** eine erste Laserlichtquelle (12a) zur Ausstrahlung eines ersten Primärlichtbündels (14a) in einen ersten Primärraumwinkelbereich um eine erste Primärstrahlachse (16a), sowie eine zweite Laserlichtquelle (12b) zur Ausstrahlung eines zweiten Primärlichtbündels (14b) in einen zweiten Primärraumwinkelbereich um eine zweite Primärstrahlachse (16b) vorgesehen ist, wobei das Photolumineszenzelement (18) derart angeordnet ist, dass das erste und das zweite ausstrahlbare Primärlichtbündel (14a, 14b) auf das Photolumineszenzelement (18) treffen, wobei eine erste Detektionseinrichtung (34a) zur Detektion von Lichtbündeln im Strahlengang nach dem Photolumineszenzelement (18) in dem ersten Primärraumwinkelbereich um die erste Primärstrahlachse (16a) vorgesehen ist, und wobei eine zweite Detektionseinrichtung (34b) zur Detektion von Lichtbündeln im Strahlengang nach dem Photolumineszenzelement (18) in dem zweiten Primärraumwinkelbereich um die zweite Primärstrahlachse (16b) vorgesehen ist.

## Claims

1. Light module (10, 50, 60, 80, 90) for motor vehicle headlamps, comprising: at least one laser light source (12, 12a, 12b) for emitting a primary light pencil (14) in a primary solid angle range about a primary beam axis (16); a photoluminescent element (18) which is arranged in such a way that the primary light pencil (14) that can be emitted by means of the laser light source (12) hits the photoluminescent element (18), and which is designed in such a way that a secondary light distribution (20) can be emitted as a result of the incident primary light pencil (14) by utilizing photoluminescence; an emission optical device (22) which is designed in such a way that the secondary light distribution (20) can be converted into an emission light distribution (28) of the light module; at least one detection device (34, 34a, 34b) which is designed and arranged in such a way that it is possible to detect when the radiation intensity of light pencils that extend in the beam path downstream of the photoluminescent element (18) in the primary solid angle range about the primary beam axis (16) exceeds a safety limit, the detection device (34) being designed to measure the radiation intensity of light pencils that extend in the primary solid angle range about the primary beam axis, **characterized in that** a reference detection device (52) is provided which is designed and arranged such that it is possible to measure a reference radiation intensity of the secondary light distribution (20) outside the primary solid angle range about the primary beam axis (16).

2. Light module according to claim 1, **characterized in that** a control device (38) for actuating the laser light source to output light is provided, which device interacts with the detection device (34) such that a light output of the laser light source (12) can be prevented when the safety limit is exceeded.

3. Light module according to at least claim 1 and claim 2, **characterized in that** the control device (38) is designed in such a way that the safety limit can be specified on the basis of the reference radiation intensity.

4. Light module according to any of the preceding claims, **characterized in that** the detection device (34) comprises a deflection reflector element (64) that is arranged in the beam path downstream of the photoluminescent element (18) and that is designed in such a way that light pencils that extend in the beam path downstream of the photoluminescent element (18) in the primary solid angle range about the primary beam axis (16) are deflected to a detector element (63) of the detection device (34).

5. Light module according to any of the preceding claims, **characterized in that** the emission optical device (22) comprises a reflector surface (24) that comprises an opening (32), the detection device (34) being designed such that light pencils that radiate through the opening (32) are detected.

6. Light module according to any of the preceding claims, **characterized in that** the emission optical device (22) is designed in such a way that at least one focal point (30) or a focal line is defined, the focal point (30) or the focal line being located on the photoluminescent element (18) .

7. Light module according to any of the preceding claims, **characterized in that** the photoluminescent element (18) comprises at least one light passage surface (92) and a reflection surface (94) on which light beams passing through the light passage surface (92) can be reflected, the reflection surface (94) and/or the detection device (34) being arranged in such a way that light pencils that extend in the primary solid angle range about the primary beam axis (16) are reflected in such a way that they do not hit the detection device (34).

8. Light module according to any of the preceding claims, **characterized in that** a first laser light source (12a) for emitting a first primary light pencil (14a) in a first primary solid angle range about a first primary beam axis (16a) is provided, and a second laser light source (12b) for emitting a second primary light pencil (14b) in a second primary solid angle range about a second primary beam axis (16b) is provided, the photoluminescent element (18) being arranged in such a way that the first and the second emittable primary light pencils (14a, 14b) hit the photoluminescent element (18), a first detection device (34a) for detecting light pencils in the beam path downstream of the photoluminescent element (18) in the first solid angle range about the first primary beam axis (16a) being provided, and a second detection device (34b) for detecting light pencils in the beam path downstream of the photoluminescent element (18) in the second solid angle range about the second primary beam axis (16b) being provided.

## Revendications

1. Module de lumière (10, 50, 60, 80, 90) pour phare de véhicule automobile, comprenant: au moins une source de lumière laser (12, 12a, 12b) pour émettre un faisceau de lumière primaire (14) dans une zone angulaire d'espace primaire autour d'un axe de faisceau primaire (16); un élément photoluminescent (18) qui est agencé de telle manière que le faisceau de lumière primaire (14) qui peut être émis par ladite source de lumière laser (12) rencontre ledit élément photoluminescent (18), et qui est conçu de telle manière que, grâce au faisceau de lumière primaire (14) incident, une répartition de lumière secondaire (20) peut être émise en utilisant de la photoluminescence; un dispositif d'optique de rayonnement (22) qui est conçu de telle manière que la répartition de lumière secondaire (20) peut être transformée en une répartition lumineuse rayonnante (28) du module de lumière; au moins un dispositif de détection (34, 34a, 34b) qui est conçu et agencé de telle manière qu'il est détectable si l'intensité de rayonnement de faisceaux de lumière qui s'étendent sur le trajet des rayons en aval de l'élément photoluminescent (18) dans la zone angulaire d'espace primaire autour de l'axe de faisceau primaire (16) dépasse une valeur limite de sécurité, dans lequel ledit dispositif de détection (34) est conçu pour mesurer l'intensité de rayonnement de faisceaux de lumière qui s'étendent dans la zone angulaire d'espace primaire autour de l'axe de faisceau primaire, **caractérisé par le fait qu'**un dispositif de détection de référence (52) est prévu qui est conçu et agencé de telle sorte que l'on peut mesurer une intensité de rayonnement de référence de la répartition de lumière secondaire (20) à l'extérieur de la zone angulaire d'espace primaire autour de l'axe de faisceau primaire (16).

2. Module de lumière selon la revendication 1, **caractérisé par le fait que** l'on prévoit un dispositif de commande (38) destiné à commander ladite source de lumière laser pour émettre de la lumière, qui agit de concert avec le dispositif de détection (34) de telle manière qu'une émission de lumière de la source de lumière laser (12) peut être empêchée lorsque la valeur limite de sécurité est dépassée.

3. Module de lumière selon la revendication 1 et 2 au moins, **caractérisé par le fait que** ledit dispositif de commande (38) est conçu de telle sorte que la valeur limite de sécurité peut être déterminée en fonction de l'intensité de rayonnement de référence.

4. Module de lumière selon l'une quelconque des revendications précédentes, **caractérisé par le fait que** le dispositif de détection (34) comprend un élément réflecteur de déviation (64) qui est disposé sur le trajet des rayons en aval de l'élément photoluminescent (18) et qui est conçu de telle manière que des faisceaux de lumière qui s'étendent sur le trajet des rayons en aval de l'élément photoluminescent (18) dans la zone angulaire d'espace primaire autour de l'axe de faisceau primaire (16) sont dévies en direction d'un élément détecteur (63) du dispositif de détection (34).

5. Module de lumière selon l'une quelconque des revendications précédentes, **caractérisé par le fait que** le dispositif d'optique de rayonnement (22) comprend une surface de réflecteur (24) qui présente une percée (32), le dispositif de détection (34) étant conçu de telle sorte que la détection se fait pour de tels faisceaux de lumière qui passent à travers la percée (32).

6. Module de lumière selon l'une quelconque des revendications précédentes, **caractérisé par le fait que** le dispositif d'optique de rayonnement (22) est conçu de manière à définir au moins un foyer (30) ou une linge focale, ledit foyer (30) ou ladite ligne focale étant situé(e) sur l'élément photoluminescent (18).

7. Module de lumière selon l'une quelconque des revendications précédentes, **caractérisé par le fait que** ledit élément photoluminescent (18) présente au moins une surface de passage de lumière (92) et une surface de réflexion (94) sur laquelle peuvent être réfléchis des rayons de lumière qui passent à travers la surface de passage de lumière (92), dans lequel ladite surface de réflexion (94) et/ou le dispositif de détection (34) est agencé(e) de telle manière que des faisceaux de lumière qui s'étendent dans la zone angulaire d'espace primaire autour de l'axe de faisceau primaire (16) sont réfléchis de manière à ne pas rencontrer le dispositif de détection (34) .

8. Module de lumière selon l'une quelconque des revendications précédentes, **caractérisé par le fait que** l'on prévoit une première source de lumière laser (12a) pour émettre un premier faisceau de lumière primaire (14a) dans une première zone angulaire d'espace primaire autour d'un premier axe de faisceau primaire (16a), ainsi qu'une deuxième source de lumière laser (12b) pour émettre un deuxième faisceau de lumière primaire (14b) dans une deuxième zone angulaire d'espace primaire autour d'un deuxième axe de faisceau primaire (16b), dans lequel ledit élément photoluminescent (18) est agencé de telle sorte que les premier et deuxième faisceaux de lumière primaire (14a, 14b) rencontrent l'élément photoluminescent (18), un premier dispositif de détection (34a) destiné à détecter des faisceaux de lumière sur le trajet des rayons en aval de l'élément photoluminescent (18) étant prévu dans la première zone angulaire d'espace primaire autour du premier axe de faisceau primaire (16a), et un deuxième dispositif de détection (34b) destiné à détecter des faisceaux de lumière sur le trajet des rayons en aval de l'élément photoluminescent (18) étant prévu dans la deuxième zone angulaire d'espace primaire autour du deuxième axe de faisceau primaire (16b).
